# EUROPEAN PATENT SPECIFICATION

(11) **EP 3 538 696 B1**
(45) Date of publication and mention of the grant of the patent: **22.07.2026**
(21) Application number: 17800415.6
(22) Date of filing: 27.10.2017
(51) Int. Cl.: D02J 1/18

(54) **AN APPARATUS AND METHOD FOR SPREADING FIBRES**
VORRICHTUNG UND VERFAHREN ZUR VERTEILUNG VON FASERN
APPAREIL ET PROCÉDÉ D'ÉTALEMENT DE FIBRES

(30) Priority: 11.11.2016 GB 201619146
(43) Date of publication of application: 18.09.2019
(73) Proprietor: Hexcel Composites Limited, Duxford, Cambridgeshire CB22 4QB (GB)
(72) Inventor: ELLIS, John, Duxford Cambridgeshire CB22 4QB (GB); ARCIDIACONO, Marco, Duxford Cambridgeshire CB22 4QB (GB); CABALLERO, Andrea, Duxford Cambridgeshire CB22 4QB (GB)
(74) Representative: Murgitroyd & Company
(86) International application number: PCT/EP2017/077703
(87) International publication number: WO 2018/086921

(56) References cited:
- EP-A1- 2 436 809
- WO-A1-2006/134271
- WO-A1-84/00351
- GB-A- 2 471 319
- JP-A- 2003 096 638
- JP-A- S6 183 006
- JP-A- S61 275 438
- US-A- 3 798 095
- DATABASE WPI Week 198506, 1985 Derwent World Patents Index; AN 1985-034464, XP002778391

## Description

The present invention relates to an apparatus and a method for spreading fibres, particularly but not exclusively to a spreading apparatus for the expansion of the width of fiber tows, and a method adapted to expand the width of fiber tows.

### BACKGROUND

Fiber tows comprise multiple individual fibre filaments. By spreading the fiber tows, the number of filaments per unit of width of the fiber tows is reduced. In this way, the weight of the tow per unit of width is reduced. This in turn allows the manufacture of light weight fabrics containing multiples of such spread tows.

Apparatus and processes for spreading individual and multiple fiber tows are disclosed in many publications. Examples of such disclosures are described now.

EP1548166 discloses a fibre tow spreading machine for converting bundled fibres comprising multiple filaments into a flat tape of spread filaments. The invention uses continuous airflow perpendicular to the tows to spread the fiber tows.

EP2436809 discloses another method for spreading fibre bundles in which an air flow spreads fibers tows which are allowed to bend in the air flow.

EP0837162 discloses a multi-filament spread tow sheet, and method and device for the manufacture thereof. The sheet is produced by the steps of supplying multiple fiber tows in an overfeed condition from a supply means to a winding means and by subjecting the fiber tows to an air flow whilst they are supported on support bars.

Further prior art is disclosed in JPS61275438, JPS6183006 and GB2471319.

As is clear from these disclosures, when spreading fiber tows, it is important that their tension is reduced and is as low as possible to enable effective spreading of the tows. These spread tows are conventionally wound onto a spool after spreading. However, winding increases the tension in the spread tow which results in a reduction of its spread width because with increased tension the fibre tow collapses.

The present invention aims to obviate or at least mitigate this problem and/or to provide improvements generally.

According to the invention there is provided an apparatus and a method as defined in any one of the accompanying claims.

In an embodiment of the invention there is provided a fiber tow spreading apparatus comprising: fiber supply for supplying a fiber tow; a fiber spreader for spreading the filaments of the fiber tow to form a spread tow having an increased width; a guide member for directing the fiber tow in relation to the fiber spreader; a driver for driving the fiber tow in relation to the fiber spreader; wherein the driver comprises a moveable contacting surface to which the fiber is adhered.

Following spreading through exposure to the fiber spreader the fiber is directly in contact with the contacting surface without being exposed to any intermediate processing steps which reduce the width of the spread tow. The contacting surface stabilizes or fixes the spread configuration of the tow and drives the tow in relation to the fiber spreader.

The apparatus is adapted to spread an individual tow, but the apparatus may also be adapted to spread multiple tows. As the spread fiber tow or tows are adhered to the contacting surface, the tows do not reduce in width following their exposure to the spreading unit.

Any tension which is applied to the tow following its exposure to the fiber spreader is disposed of by its adherence to the contacting surface. In this way, the invention allows the spread tows to be processed by subsequent steps such as handling and winding without their width being reduced during subsequent processing steps following spreading.

In an embodiment, the apparatus is adapted to spread multiple tows. In this embodiment, the fiber supply provides a plurality of fiber tows and the fiber spreader spreads the filaments of each of the plurality of fiber tows to form a sheet. The sheet may be continuous or may comprise discrete spaced spread tows. Multiple tows can be supplied from a creel in which multiple spools or bobbins of fiber tows are placed.

In a further embodiment, the contacting surface contacts the spread fiber tow. The contacting surface drives the spread tow through the apparatus.

In a preferred embodiment, the contacting surface comprises a tack surface for tacking the spread fiber tow to its surface. The tack surface secures the spread tow or tows.

The contacting surface may be in the form of a resin layer. The resin layer has a surface tack upon a first point of contact with the tow to allow the spread fiber tow to adhere to its surface. The surface tack of a resin is an inherent property of the resin. Tack in resins is dependent on temperature. Thus tack can be controlled by controlling the temperature of the resin. Within the context of this invention, contacting with the contacting surface preferably occurs at room temperature and the tack of the resin at room temperature is sufficient to adhere the fiber tow to its surface.

In a preferred embodiment, the fiber tow adheres to the resin layer from the first point of contact and downstream from the point of contact when viewed in the direction of movement of the surface.

In this way, the spread tow or tows are located onto the resin layer after being exposed to the fiber spreader. Thus, a spread tow and resin ensemble is formed.

The presence of the resin layer stabilizes the spread tow and allows these to be exposed to subsequent forces associated with subsequent processing steps such as impregnation, slitting and winding without the spread fiber reducing in width or distorting in any way.

The resin layer is in sheet form and may be located on a release layer. The release layer is removable to allow deposition of the resin layer and tow ensemble.

Preferably, the spread fiber tows form a sheet which his adhered to the resin layer.

The fiber spreader comprises a spreading surface which contacts the fiber tow, the first point of contact of the contracting surface with the spread tow being elevated in relation to the spreading surface. This ensures the fiber tows is in contact with the contacting surface over a significant contact area to ensure adequate contact for driving the tow in relation to the fiber spreader. The contacting surface is inclined following the first point of contact. This further increases the contact area between the surface and the tow. This is particularly useful for multiple spread tows which form a continuous sheet of spread fibers.

In another embodiment, the apparatus comprises a guide member, the guide member comprising multiple spaced guide elements. The guide member controls the width of the tow as it is supplied to the fiber spreader. For multiple tows, the guide member maintains adequate spacing between the multiple fiber tows.

The spacing d between the multiple spaced guide elements is preferably adjustable. The guide member is arranged at an angle β in relation to the direction of the tows, to expose the tows to an aperture w which is directly proportional to the spacing width d between guide members and sin β. The density of the fiber tows may then be defined as number of filaments/ unit of width is directly proportional to d.sin β. The width of the tow following the guide member is w = d.sin β.

In a further embodiment of the invention, the spacing between the guide elements d controls the density of the spread filaments of the tow or tows across the spread sheet.

The spread unit may comprise any of the conventional apparatus for spreading fiber tows, such as the apparatus described in EP1548166, EP2436809 or EP0837162 as briefly disclosed in this application.

In another embodiment of the invention the apparatus comprises a resin impregnation section. In this way, the apparatus is integrated into an impregnation machine to produce tow preg or prepreg from a respective a spread tow, or from multiple spread tows. The resin impregnation section further comprises means for at least partially impregnating the spread sheet, said means comprising compression equipment, heating equipment or a combination of the aforesaid equipments.

In yet another embodiment of the invention there is provided a method of spreading a fiber tow comprising providing a fiber supply for supplying a fiber tow; a fiber spreader for spreading the filaments of the fiber tow to form a spread sheet; a guide member for directing the fiber tow in relation to the fiber spreader; a driver for driving the fiber tow in relation to the fiber spreader; the method further comprising the steps of directing the fiber tow from the fiber supply to the fiber spreader and providing a fiber adhering contacting surface, wherein the fiber adhering contacting surface is movable to drive the tows over the fiber spreader.

The contacting surface secures the fiber tow in its spread configuration so that the contacting surface stabilizes the spread fiber tow. This allows the fiber tows to be pulled from the fiber supply by exerting a pull force on the contacting surface and this force does not result in a distortion or a reduction in width of the fiber tow.

This is an important advantage over known methods for spreading fiber tows in which the spread tows are subjected to distortion due to forces to which the tows are exposed following their spreading.

Preferably, the method is adapted to spread multiple tows, the spread tows forming a sheet. The method may further comprise the step of impregnating the tow or tows.

The invention will now be described by way of example only and with reference to the accompanying drawings in which
Figure 1 presents a diagrammatic view of an apparatus according to an embodiment of the invention;
Figure 2 presents a diagrammatic view of another apparatus according to another embodiment of the invention; and
Figure 3 present a diagrammatic view of a guide member according to a further embodiment of the invention.

In Figure 1 a spreading apparatus 10 is shown which comprises a fiber supply for supplying a fiber tow 12; a fiber spreader 14 for spreading the filaments of the fiber tow 12 to form a spread tow having an increased width; a guide member 16 for directing the fiber tow in relation to the fiber spreader 14; and, a driver 18 for driving the fiber tow 12 in relation to the fiber spreader 14. The driver 18 comprises a moveable fiber adhering contacting surface 20 to which the spread fiber tow 12 is adhered.

The fiber supply 12 is in the form of a bobbin mounted on a creel so that it is freely rotating. So the fiber tow is driven and exposed to the fiber spreader 14 by means of the moving contacting surface 20 to which the fiber tow is adhered. The adhesion to the contacting surface is achieved by a resin film which is located on a carrier or substrate which is in the form of a release film. The carrier or substrate is moved by the driver rollers 18. The resulting product 24 is thus an ensemble of the spread tow in combination with a resin film located on a release film as substrate.

The contact surface which first contacts the fiber tow is elevated in relation to the spreading surface of the fiber spreader. This results in a secure contact between the tow and the contact surface and enables adherence between the tow and the contacting surface so that the contacting surface can drive the tow. As shown in Figure 1, the contacting surface is also inclined and roller 22 is used to conduct the tow to the contacting surface to ensure a large contacting area between the tow and the contacting surface. The larger contacting area promotes adhesion between the resin layer and the fiber tow.

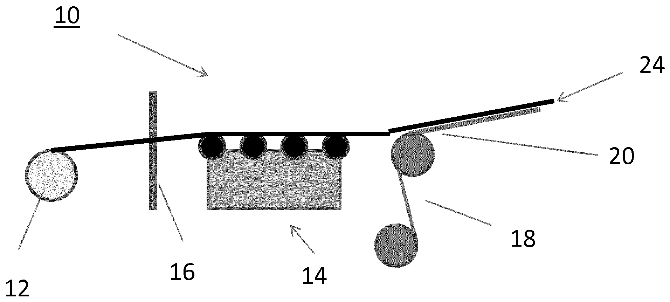

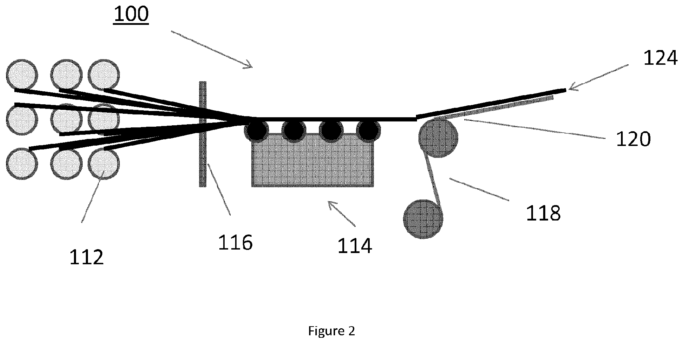

In use, a fiber tow 12 is supplied from a bobbin and guided by member 16 to a fiber spreader 14 which spreads the tow 12. Figure 2 presents a similar apparatus to the apparatus of Figure 1 but this apparatus 100 is adapted to form an ensemble 124 of a resin layer in combination with spread tows which form a sheet.

The apparatus 100 comprises a fiber supply 112 in the form of a creel with multiple freely rotating fiber spools or bobbins for supplying multiple fiber tows; a fiber spreader 114 for spreading the filaments of the fiber tows to form a spread tow sheet of combined spread tows; a guide member 116 for directing the fiber tows in relation to the fiber spreader 114; a driver 118 for driving the fiber tows in relation to the fiber spreader 114. The driver 118 comprises a moveable fiber adhering contacting surface 120 to which the spread fiber tows are adhered.

The fibers tows are thus adhered to the exposed resin film layer to form an ensemble of the resin film and spread fiber layer.

The adhesion to the contacting surface is achieved by a resin film which is located on a carrier or substrate. The carrier or substrate is moved by the driver 118. The resulting product 124 is thus an ensemble of the spread tow in combination with a resin film.

The contact surface which first contacts the fiber tows is elevated in relation to the spreading surface of the fiber spreader similar to the apparatus of Figure 1.

In use, a fiber tows are supplied from a creel 112 loaded with multiple bobbins and guided by member 116 to a fiber spreader 114 which spreads the tows. The resin film 120 is driven through by driver 118.

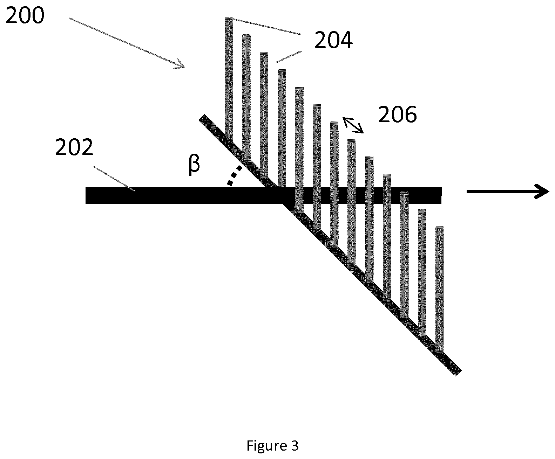

Finally, Figure 3 shows further aspects of the guide members 16,116, referenced as 200 in this Figure. For clarity the guide member 200 is shown with a single tow 202.

The guide member 200 comprises multiple guide elements 204 which are equi-spaced at a distance d 206. The guide member 200 is further angled in relation to the tow by an angle β. The ange reduces the effective spacing of the guide elements 204 to an angle w = d.sin β . This results in a reduction in the width of the tow but more importantly, it also allows control of the density per unit width of the tow (number of filaments per mm) which in turn effects the density of the spread tow as it passes over the spreading unit.

The angle β of the guide member thus enables control of the density per unit width of the spread tow or in case of multiple tows, spread fiber tows because the density is directly proportional to d.sin β .

There is thus provided an apparatus for spreading fiber tow(s) in which the width of the tows is fixed following their exposure to the spreading unit by their direct adherence to a contacting surface which drives the tows in relation to the spreading unit without any intermediate process steps. The apparatus can comprise an impregnation unit to manufacture resin impregnated fiber reinforced material (also known as prepreg) from spread tows.

## Claims

1. A fiber tow spreading apparatus (10, 100) comprising:
a. a fiber supply (12, 112) for supplying a fiber tow;
b. a fiber spreader (14, 114) for spreading the filaments of the fiber tow to form a spread tow having an increased width;
c. a guide member (16, 116) for directing the fiber tow in relation to the fiber spreader (14, 114);
d. a driver (18, 118) for driving the fiber tow in relation to the fiber spreader (14,114);
wherein the driver (14, 114) comprises a moveable fiber adhering contacting surface (20, 120) to which the fiber is adhered; and further wherein the contacting surface (20, 120) that first contacts the spread fiber tow is elevated in relation to the spreading surface of the fiber spreader (14, 114) and the contacting surface (20, 120) is inclined following the first point of contact with spread fiber tow.

2. An apparatus (10, 100) according to claim 1, wherein the spread tow is contacted with the driver (18, 118) without being exposed to any process steps which reduce the width of the tow following its exposure to the spreader (14, 114).

3. An apparatus (10, 100) according to claim 2, wherein the tow is directly in contact with the contacting surface (20, 120) following its exposure to the fiber spreader (14, 114).

4. An apparatus (10, 100) according to any of the preceding claims, wherein the fiber supply (12, 112) provides a plurality of fiber tows and the fiber spreader (14, 114) spreads the filaments of each of the plurality of fiber tows to form a continuous spread sheet.

5. An apparatus (10, 100) according to any of the preceding claims, wherein the contacting surface (20, 120) contacts the spread fiber tow.

6. An apparatus (10, 100) according to any of the preceding claims, wherein the contacting surface (20, 120) comprises a tack surface for tacking the spread fiber tows to its surface, the contacting surface (20, 120) being in the form of a resin layer.

7. An apparatus (10, 100) according to claim 6, wherein the resin layer is located on a removable release layer.

8. An apparatus (10, 100) according to any of the preceding claims, wherein the guide member (16, 116, 200) comprises multiple spaced guide elements (204).

9. An apparatus (10, 100) according to claim 8, wherein the spacing d (206) between the multiple spaced guide elements (204) is adjustable.

10. An apparatus (10, 100) according to claim 8 or 9, wherein the guide member (16, 116, 200) is arranged at an angle β in relation to the direction of the tows, to expose the tows to an aperture which is directly proportional to the spacing width w between guide members (204) and sin β.

11. An apparatus (10, 100) according to claim 10, wherein the density of the fiber tows defined as number of filaments/ unit of width w is directly proportional to d.sin β.

12. An apparatus (10, 100) according to any of claims 9 to 11, wherein the spacing d (206) between the guide elements (204) controls the density of the spread filaments of the tow or tows across the spread sheet.

13. An apparatus (10, 100) according to any one of claims 6 to 12 comprising a resin impregnation section.

14. An apparatus (10, 100) according to claim 13, wherein the resin impregnation section further comprises means for at least partially impregnating the spread sheet with the resin, said means comprising compression equipment, heating equipment or a combination of the aforesaid equipment.

15. A method of spreading a fiber tow comprising providing
a. a fiber supply (12, 112) for supplying a fiber tow;
b. a fiber spreader 914, 114) for spreading the filaments of the fiber tow to form a spread sheet;
c. a guide member (16, 116) for directing the fiber tow in relation to the fiber spreader (14, 114);
d. a driver (18, 118) for driving the fiber tow in relation to the fiber spreader (14, 114);
the method further comprises the steps of directing the fiber tow from the fiber supply (12, 112) to the fiber spreader (14, 114) and providing a fiber adhering contacting surface (20, 120),
wherein the fiber adhering contacting surface (20, 120) is movable to drive the tows over the fiber spreader (14, 114) and the contacting surface (20, 120) secures the fiber tow in its spread configuration; and further wherein the contacting surface (20, 120) that first contacts the spread fiber tow is elevated in relation to the spreading surface of the fiber spreader (14, 114) and the contacting surface (20, 120) is inclined following the first point of contact with spread fiber tow.

16. A method according to claim 15, wherein the spread tow is contacted with the driver (18, 118) without being exposed to any process steps which reduce the width of the tow following its exposure to the spreader (14, 114), preferably the tow being directly in contact with the contacting surface (20, 120) following its exposure to the fiber spreader (14, 114).

17. A method according to any of claims 15 or 16, wherein the method is adapted to spread multiple tows, the spread tows forming a sheet.

## Patentansprüche

1. Eine Faserkabelausbreitungsvorrichtung (10, 100), die Folgendes beinhaltet:
a. eine Faserzufuhr (12, 112) zum Zuführen eines Faserkabels;
b. einen Faserausbreiter (14, 114) zum Ausbreiten der Filamente des Faserkabels, um ein ausgebreitetes Kabel mit einer vergrößerten Breite zu bilden;
c. ein Führungselement (16, 116) zum Lenken des Faserkabels in Bezug auf den Faserausbreiter (14, 114);
d. einen Treiber (18, 118) zum Treiben des Faserkabels in Bezug auf den Faserausbreiter (14, 114);
wobei der Treiber (14, 114) eine bewegliche faseranhaftende Kontaktfläche (20, 120) beinhaltet, an der die Faser anhaftet; und wobei ferner die Kontaktfläche (20, 120), die zuerst das ausgebreitete Faserkabel kontaktiert, in Bezug auf die Ausbreitungsfläche des Faserausbreiters (14, 114) erhöht ist und die Kontaktfläche (20, 120) dem ersten Kontaktpunkt mit ausgebreitetem Faserkabel folgend geneigt ist.

2. Vorrichtung (10, 100) gemäß Anspruch 1, wobei das ausgebreitete Kabel mit dem Treiber (18, 118) kontaktiert wird, ohne irgendwelchen Prozessschritten ausgesetzt zu sein, die die Breite des Kabels seiner Aussetzung gegenüber dem Ausbreiter (14, 114) folgend verringern.

3. Vorrichtung (10, 100) gemäß Anspruch 2, wobei das Kabel seiner Aussetzung gegenüber dem Faserausbreiter (14, 114) folgend direkt in Kontakt mit der Kontaktfläche (20, 120) ist.

4. Vorrichtung (10, 100) gemäß einem der vorhergehenden Ansprüche, wobei die Faserzufuhr (12, 112) eine Vielzahl von Faserkabeln bereitstellt und der Faserausbreiter (14, 114) die Filamente von jedem der Vielzahl von Faserkabeln ausbreitet, um ein kontinuierliches ausgebreitetes Blatt zu bilden.

5. Vorrichtung (10, 100) gemäß einem der vorhergehenden Ansprüche, wobei die Kontaktfläche (20, 120) das ausgebreitete Faserkabel kontaktiert.

6. Vorrichtung (10, 100) gemäß einem der vorhergehenden Ansprüche, wobei die Kontaktfläche (20, 120) eine Heftfläche zum Heften der ausgebreiteten Faserkabel an ihre Oberfläche beinhaltet, wobei die Kontaktfläche (20, 120) in Form einer Harzschicht vorliegt.

7. Vorrichtung (10, 100) gemäß Anspruch 6, wobei sich die Harzschicht auf einer entfernbaren Trennschicht befindet.

8. Vorrichtung (10, 100) gemäß einem der vorhergehenden Ansprüche, wobei das Führungselement (16, 116, 200) mehrere beabstandete Führungselemente (204) beinhaltet.

9. Vorrichtung (10, 100) gemäß Anspruch 8, wobei der Abstand d (206) zwischen den mehreren beabstandeten Führungselementen (204) einstellbar ist.

10. Vorrichtung (10, 100) gemäß Anspruch 8 oder 9, wobei das Führungselement (16, 116, 200) in einem Winkel β in Bezug auf die Richtung der Kabel angeordnet ist, um die Kabel einer Öffnung auszusetzen, die direkt proportional zu der Abstandsbreite w zwischen Führungselementen (204) und sin β ist.

11. Vorrichtung (10, 100) gemäß Anspruch 10, wobei die Dichte der Faserkabel, die als Anzahl von Filamenten/Einheit der Breite w definiert ist, direkt proportional zu d.sin β ist.

12. Vorrichtung (10, 100) gemäß einem der Ansprüche 9 bis 11, wobei der Abstand d (206) zwischen den Führungselementen (204) die Dichte der ausgebreiteten Filamente des Kabels oder der Kabel über das ausgebreitete Blatt steuert.

13. Vorrichtung (10, 100) gemäß einem der Ansprüche 6 bis 12, die einen Harzimprägnierungsabschnitt beinhaltet.

14. Vorrichtung (10, 100) gemäß Anspruch 13, wobei der Harzimprägnierungsabschnitt ferner Mittel zum zumindest teilweisen Imprägnieren des ausgebreiteten Blatts mit dem Harz beinhaltet, wobei die Mittel Kompressionsausrüstung, Heizausrüstung oder eine Kombination der vorgenannten Ausrüstung beinhalten.

15. Ein Verfahren zum Ausbreiten eines Faserkabels, das das Bereitstellen von Folgendem beinhaltet:
a. eine Faserzufuhr (12, 112) zum Zuführen eines Faserkabels;
b. einen Faserausbreiter (14, 114) zum Ausbreiten der Filamente des Faserkabels, um ein ausgebreitetes Blatt zu bilden;
c. ein Führungselement (16, 116) zum Lenken des Faserkabels in Bezug auf den Faserausbreiter (14, 114);
d. einen Treiber (18, 118) zum Treiben des Faserkabels in Bezug auf den Faserausbreiter (14, 114);
wobei das Verfahren ferner die folgenden Schritte beinhaltet: Lenken des Faserkabels von der Faserzufuhr (12, 112) zu dem Faserausbreiter (14, 114) und Bereitstellen einer faseranhaftenden Kontaktfläche (20, 120),
wobei die faseranhaftende Kontaktfläche (20, 120) beweglich ist, um die Kabel über den Faserausbreiter (14, 114) zu treiben, und die Kontaktfläche (20, 120) das Faserkabel in seiner ausgebreiteten Konfiguration sichert; und wobei ferner die Kontaktfläche (20, 120), die zuerst das ausgebreitete Faserkabel kontaktiert, in Bezug auf die Ausbreitungsfläche des Faserausbreiters (14, 114) erhöht ist und die Kontaktfläche (20, 120) dem ersten Kontaktpunkt mit ausgebreitetem Faserkabel folgend geneigt ist.

16. Verfahren gemäß Anspruch 15, wobei das ausgebreitete Kabel mit dem Treiber (18, 118) kontaktiert wird, ohne irgendwelchen Prozessschritten ausgesetzt zu sein, die die Breite des Kabels seiner Aussetzung gegenüber dem Ausbreiter (14, 114) folgend verringern, wobei das Kabel vorzugsweise seiner Aussetzung gegenüber dem Faserausbreiter (14, 114) folgend direkt in Kontakt mit der Kontaktfläche (20, 120) ist.

17. Verfahren gemäß einem der Ansprüche 15 oder 16, wobei das Verfahren angepasst ist, um mehrere Kabel auszubreiten, wobei die ausgebreiteten Kabel ein Blatt bilden.

## Revendications

1. Un appareil (10, 100) d'étalement de mèches de fibres comprenant :
a. une alimentation en fibres (12, 112) pour alimenter une mèche de fibres ;
b. un étaleur de fibres (14, 114) pour étaler les filaments de la mèche de fibres afin de former une mèche étalée ayant une largeur accrue ;
c. un organe de guidage (16, 116) pour diriger la mèche de fibres par rapport à l'étaleur de fibres (14, 114) ;
d. un dispositif d'entraînement (18, 118) pour entraîner la mèche de fibres par rapport à l'étaleur de fibres (14, 114) ;
dans lequel le dispositif d'entraînement (14, 114) comprend une surface de contact (20, 120) adhérant aux fibres mobile à laquelle la fibre adhère ; et en outre dans lequel la surface de contact (20, 120) qui est en premier lieu en contact avec la mèche de fibres étalée est surélevée par rapport à la surface d'étalement de l'étaleur de fibres (14, 114) et la surface de contact (20, 120) est inclinée à la suite du premier point de contact avec la mèche de fibres étalée.

2. Un appareil (10, 100) selon la revendication 1, dans lequel la mèche étalée est mise en contact avec le dispositif d'entraînement (18, 118) sans être exposée à de quelconques étapes de processus qui réduisent la largeur de la mèche à la suite de son exposition à l'étaleur (14, 114).

3. Un appareil (10, 100) selon la revendication 2, dans lequel la mèche est directement en contact avec la surface de contact (20, 120) à la suite de son exposition à l'étaleur de fibres (14, 114).

4. Un appareil (10, 100) selon n'importe lesquelles des revendications précédentes, dans lequel l'alimentation en fibres (12, 112) fournit une pluralité de mèches de fibres et l'étaleur de fibres (14, 114) étale les filaments de chaque mèche de la pluralité de mèches de fibres afin de former une nappe étalée continue.

5. Un appareil (10, 100) selon n'importe lesquelles des revendications précédentes, dans lequel la surface de contact (20, 120) est en contact avec la mèche de fibres étalée.

6. Un appareil (10, 100) selon n'importe lesquelles des revendications précédentes, dans lequel la surface de contact (20, 120) comprend une surface collante pour coller les mèches de fibres étalées à sa surface, la surface de contact (20, 120) étant sous la forme d'une couche de résine.

7. Un appareil (10, 100) selon la revendication 6, dans lequel la couche de résine est située sur une couche antiadhérente détachable.

8. Un appareil (10, 100) selon n'importe lesquelles des revendications précédentes, dans lequel l'organe de guidage (16, 116, 200) comprend de multiples éléments de guidage (204) espacés.

9. Un appareil (10, 100) selon la revendication 8, dans lequel l'espacement d (206) entre les multiples éléments de guidage (204) espacés est réglable.

10. Un appareil (10, 100) selon la revendication 8 ou la revendication 9, dans lequel l'organe de guidage (16, 116, 200) est agencé à un angle β par rapport à la direction des mèches, afin d'exposer les mèches à une ouverture qui est directement proportionnelle à la largeur d'espacement w entre les organes de guidage (204) et sin β.

11. Un appareil (10, 100) selon la revendication 10, dans lequel la densité des mèches de fibres définie en tant que nombre de filaments/unité de largeur w est directement proportionnelle à d.sin β.

12. Un appareil (10, 100) selon n'importe lesquelles des revendications 9 à 11, dans lequel l'espacement d (206) entre les éléments de guidage (204) régule la densité des filaments étalés de la mèche ou des mèches sur toute la nappe étalée.

13. Un appareil (10, 100) selon n'importe laquelle des revendications 6 à 12 comprenant une section d'imprégnation de résine.

14. Un appareil (10, 100) selon la revendication 13, dans lequel la section d'imprégnation de résine comprend en outre des moyens pour imprégner au moins partiellement la nappe étalée avec la résine, lesdits moyens comprenant un équipement de compression, un équipement de chauffage ou une combinaison des équipements susmentionnés.

15. Un procédé d'étalement d'une mèche de fibres comprenant le fait de fournir
a. une alimentation en fibres (12, 112) pour alimenter une mèche de fibres ;
b. un étaleur de fibres (914, 114) pour étaler les filaments de la mèche de fibres afin de former une nappe étalée ;
c. un organe de guidage (16, 116) pour diriger la mèche de fibres par rapport à l'étaleur de fibres (14, 114) ;
d. un dispositif d'entraînement (18, 118) pour entraîner la mèche de fibres par rapport à l'étaleur de fibres (14, 114) ;
le procédé comprenant en outre les étapes consistant à diriger la mèche de fibres de l'alimentation en fibres (12, 112) à l'étaleur de fibres (14, 114) et à fournir une surface de contact (20, 120) adhérant aux fibres,
dans lequel la surface de contact (20, 120) adhérant aux fibres est mobile pour entraîner les mèches par-dessus l'étaleur de fibres (14, 114) et la surface de contact (20, 120) fixe la mèche de fibres dans sa configuration étalée ; et en outre dans lequel la surface de contact (20, 120) qui est en premier lieu en contact avec la mèche de fibres étalée est surélevée par rapport à la surface d'étalement de l'étaleur de fibres (14, 114) et la surface de contact (20, 120) est inclinée à la suite du premier point de contact avec la mèche de fibres étalée.

16. Un procédé selon la revendication 15, dans lequel la mèche étalée est mise en contact avec le dispositif d'entraînement (18, 118) sans être exposée à de quelconques étapes de processus qui réduisent la largeur de la mèche à la suite de son exposition à l'étaleur (14, 114), de préférence la mèche étant directement en contact avec la surface de contact (20, 120) à la suite de son exposition à l'étaleur de fibres (14, 114).

17. Un procédé selon n'importe lesquelles des revendications 15 ou 16, le procédé étant conçu pour étaler de multiples mèches, les mèches étalées formant une nappe.
